# EUROPÄISCHE PATENTSCHRIFT

(11) **EP 2 948 498 B1**
(45) Veröffentlichungstag und Bekanntmachung des Hinweises auf die Patenterteilung: **17.05.2017**
(21) Anmeldenummer: 14704518.1
(22) Anmeldetag: 22.01.2014
(51) Int. Cl.: C08J 5/10, A63C 5/12, B32B 27/12, B32B 27/32, B41M 3/00, B41M 5/025, B41M 5/035

(54) **BEDRUCKBARES FASERVERSTÄRKTES KUNSTSTOFF-FLÄCHENGEBILDE**
PRINTABLE FIBER-REINFORCED PLASTIC PLANAR STRUCTURE
STRUCTURE PLANE IMPRIMABLE EN PLASTIQUE RENFORCÉ PAR FIBRES

(30) Priorität: 25.01.2013 DE 102013001304
(43) Veröffentlichungstag der Anmeldung: 02.12.2015
(73) Patentinhaber: Lamilux Composites GmbH, 95111 Rehau (DE)
(72) Erfinder: TRETTER, Matthias, 95028 Hof (DE); OSWALD, Sascha, 95145 Oberkotzau (DE); MERKEL, Anneli, 95028 Hof (DE); BACHSTEIN, Stefan, 95176 Ahornberg (DE)
(74) Vertreter: Müller-Boré & Partner Patentanwälte PartG mbB
(86) Internationale Anmeldenummer: PCT/EP2014/000159
(87) Internationale Veröffentlichungsnummer: WO 2014/114450

(56) Entgegenhaltungen:
- DE-A1-102010 041 239
- US-A- 4 395 263
- DATABASE WPI Week 199130 Thomson Scientific, London, GB; AN 1991-218502 XP002727007, & JP H03 139531 A (SUMITOMO CHEM IND KK) 13. Juni 1991 (1991-06-13)
- DATABASE WPI Week 198711 Thomson Scientific, London, GB; AN 1987-076509 XP002727008, & JP S62 30126 A (FUJIKURA RUBBER WORKS LTD) 9. Februar 1987 (1987-02-09)

## Beschreibung

Die vorliegende Erfindung betrifft ein bedruckbares faserverstärktes Kunststoff-Flächengebilde, Verfahren zu dessen Herstellung und Bedruckung und die Verwendung des bedruckbaren faserverstärkten Kunststoff-Flächengebildes als Halbzeug, insbesondere für Sportgeräte wie beispielsweise Snowboards, Ski, Kiteboards, Wakeboards, Longboards oder Skateboards, und als Flächenelement von beispielsweise Caravans, Lastkraftwagen und in der plakativen Darstellung.

Faserverstärkte Kunststoffe (FVK) umfassen Verstärkungsfasern und eine Kunststoffmatrix. Die Matrix umgibt die Fasern, die durch Adhäsiv- oder Kohäsivkräfte an die Matrix gebunden sind. Dadurch ergeben sich in der Regel hohe spezifische Festigkeiten und Steifigkeiten bei vergleichsweise geringem Gewicht. Dies macht faserverstärke Kunststoffe zu geeigneten Werkstoffen in Leichtbauanwendungen.

Die Herstellung solcher faserverstärkter Kunststoffe erfolgt in der Regel durch Einbetten von Fasern, welche in nahezu beliebiger Form, beispielsweise als Gewebe, Geflecht, Gelege, Matte oder in Vliesform vorliegen können, in eine Kunststoffmatrix. Im Anschluss daran wird die Kunststoffmatrix (auch "Matrixharz" genannt) beispielsweise durch Erwärmen gehärtet, um ein formstabiles FVK-Bauteil zu erhalten. Die eingesetzten Fasern unterliegen keiner besonderen Einschränkung und umfassen beispielsweise Glas-, Kohlenstoff- oder Aramidfasern.

Unter dem Begriff Drucktechnik werden alle Verfahren zur Vervielfältigung von Druckvorlagen zusammengefasst, wie Buchdruck, Offsetdruck, Tiefdruck, Flexodruck und Siebdruck. Bei diesen Drucktechniken werden unterschiedliche Verfahren angewandt, um Farben schnell auf einen Druckträger, wie Papier oder Kunststoff, zu übertragen. Dabei ist beispielsweise der Siebdruck ein Druckverfahren, bei dem die Druckfarbe mit einer Gummirakel durch ein feinmaschiges Gewebe hindurch auf das zu bedruckende Material gedruckt wird. An denjenigen Stellen des Gewebes, wo dem Druckbild entsprechend keine Farbe gedruckt werden soll, werden die Maschenöffnungen des Gewebes durch eine Schablone farbundurchlässig gemacht. Im Siebdruckverfahren ist es möglich, flache Materialien (z.B. Folien, Platten, *etc.*) zu bedrucken. Im Vergleich zu anderen Druckverfahren ist die Druckgeschwindigkeit jedoch relativ gering.

Sublimationsdruck oder Transferdruck bezeichnet ein Druckverfahren, bei dem Farbstoff bzw. Farbmittel bzw. farbgebendes Additiv in den Trägerstoff eingedampft (sublimiert) wird. Dafür werden Transferpapiere und -folien sowie Farbstoffe bzw. Spezialtinten verwendet, die in der Regel auf synthetische Fasern sublimiert werden. Es wird zunächst eine Papierbahn bzw. eine Spezialfolie mit geeigneten Farbstoffen (seitenverkehrt) bedruckt und dann mit einer Thermotransferpresse im Umdruckverfahren durch Erhitzen auf bis zu 230°C auf das Trägermaterial übertragen. Verwendet werden Dispersionsfarbstoffe (z.B. Azofarbstoffe und Anthrachinonfarbstoffe), die wasserunlöslich sind. Vorteile beim Sublimationsdruck sind vor allem, dass sich unterschiedliche Materialien in Fotoqualität bedrucken lassen, bei vergleichsweise geringen Kosten und einer besseren Umweltverträglichkeit. Auf Binde- und Lösungsmittel, die bei anderen Druckverfahren in der Faser vorhanden sein können und ausgewaschen werden müssten, kann verzichtet werden. Außerdem ist der Druck sehr resistent gegen UV-Strahlung und andere Umwelteinflüsse.

US-Patent 4,395,263, beispielsweise, offenbart ein Sublimationsübertragungsfärbeverfahren, bei dem ein sublimierbarer Farbstoff von einer Hilfsträgerbahn auf eine Trägerschicht übertragen wird, wobei ein Bedrucken einer nicht-textilen Schicht ermöglicht wird, indem man (a) als Trägerschicht einen Schichtstoff herstellt aus (I) einer pigmenthaltigen Bindemittelschicht und (II) einer auf der Bindemittelschicht angeordneten, im wesentlichen pigmentfreien, transparenten, für den Sublimationsfarbstoff aufnahmefähigen Materialschicht, (b) den Schichtstoff aushärtet und (c) den Farbstoff durch wärmeinduzierte Sublimation von der Hilfsträgerbahn auf die transparente Schicht überträgt. Insbesondere wird in US-Patent 4,395,263 ein mit Harz beschichtetes bedrucktes faserverstärktes Kunststoff-Flächengebilde offenbart, umfassend ein Matrixharz, Verstärkungsfasern und ein weißes farbgebendes Additiv in einer Menge von ca. 8 Teilen, bezogen auf 100 Teile Harz. Ähnliche Techniken werden in US-Patent 3,782,896, US-Patent 3,813,218 oder US-Patent 3,829,286 beschrieben.

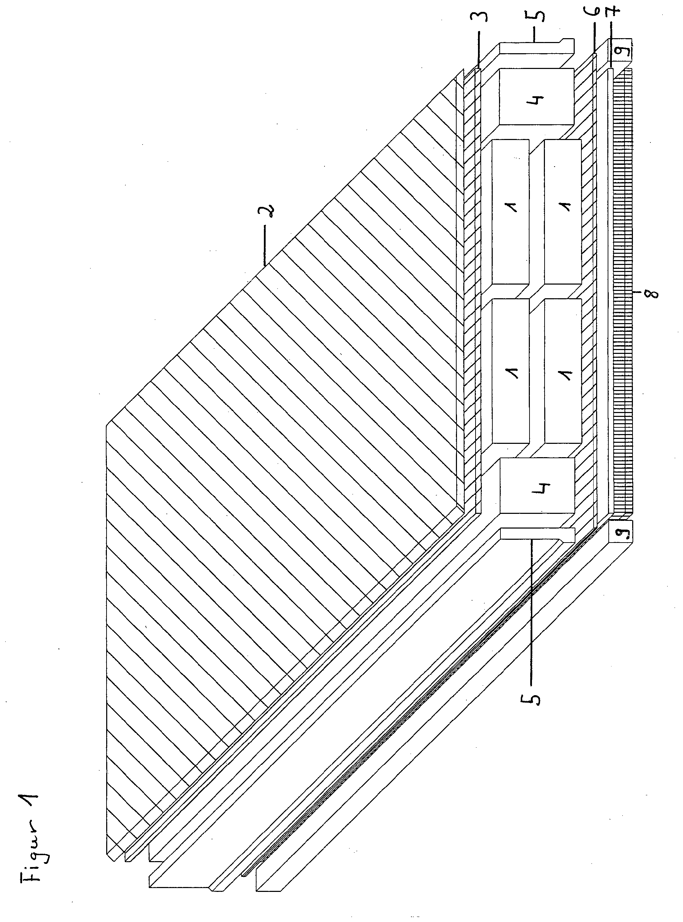

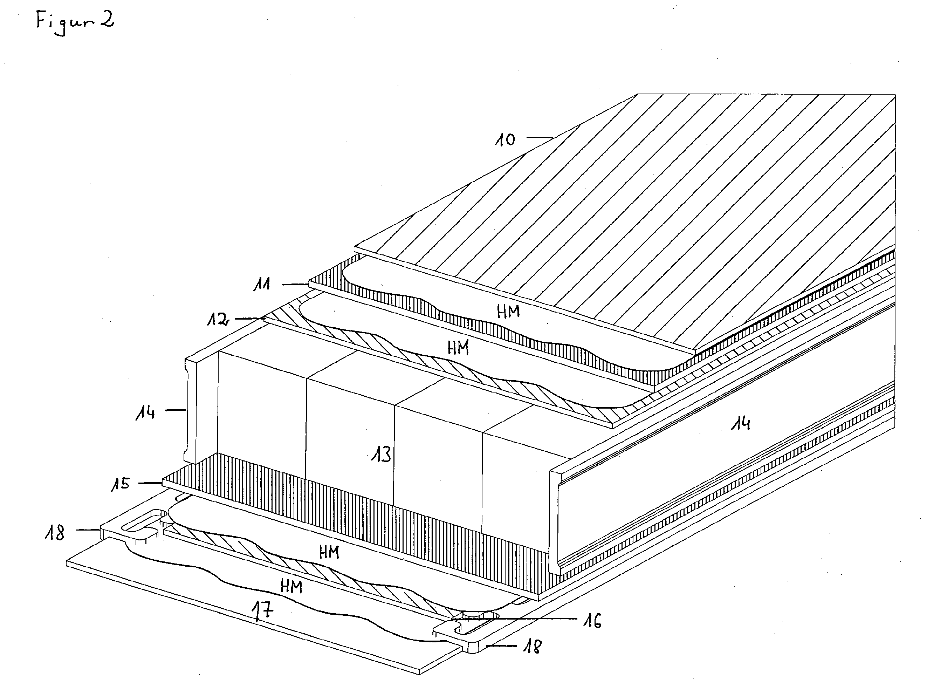

Sportgeräte wie beispielsweise Ski weisen traditionell den in den Figuren 1 und 2 gezeigten Aufbau auf. Im Speziellen verfügt ein Ski über einen Schaum- oder Holzkern (1, 13), gegebenenfalls mit Seitenelementen (4), entsprechenden Seitenwangen (5, 14) aus Holz und/oder Kunststoff, gegebenenfalls eine Ober-und Unterschicht aus beispielsweise Titanaluminium bzw. -aluminid (TiAl) (3, 6, 11, 15), gegebenenfalls ein Ober- und Untergurtlaminat aus glasfaserverstärktem Kunststoff (GFK) (12, 16), gegebenenfalls eine Kantenauflage aus Gummi (7), eine extrudierte Lauffläche (8, 17) mit seitlich angeordneten Stahlkanten (9, 18) und eine Oberschicht (2, 10), die der Gestaltung des Skis dient. Im Allgemeinen werden die einzelnen Schichten mittels Haftmitteln (HM) kraftschlüssig miteinander verbunden, was in Figur 2 beispielhaft dargestellt ist.

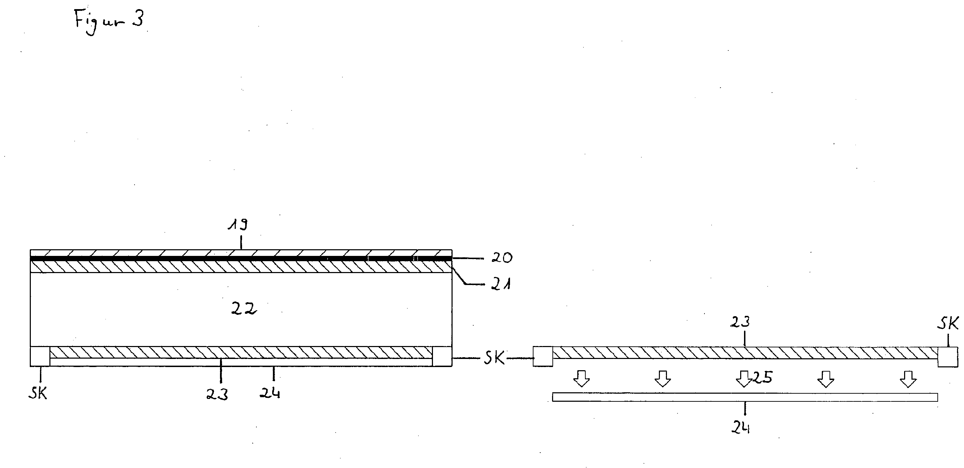

Vereinfacht kann ein solcher traditioneller Aufbau auch wie in Figur 3 gezeigt dargestellt werden. Dabei zeigt die Oberseite eine entsprechende Folie (beispielsweise Acrylnitril-Butadien-Styrol, ABS) mit Bedruckung (19) als Oberschicht, die mit einem Haftmittel (20) auf eine GFK-Schicht (21), d.h. eine Kunststoffmatrix mit Verstärkungsfasern laminiert ist, die wiederum auf einen Kern aus Schaum oder Holz (22) laminiert ist. Dabei ist zunächst zu beachten, dass eine solche GFK-Schicht selbst farblos und nicht UV-beständig ist, d.h. bei Einwirkung von UV-Strahlung würden eine Vergilbung des Harzes und eine Freilegung der Fasern erfolgen.

Ein solcher Aufbau bringt eine Reihe von Nachteilen für ein Sportgerät wie beispielsweise einen Ski oder ein Snowboard mit sich. Neben dem daraus resultierenden Gewicht ist mit entsprechenden Material- und Produktionskosten für den aufwendigen Aufbau zu rechnen, und aufgrund der entsprechend langen Prozesskette zur Herstellung eines entsprechenden Skis oder Snowboards ist mit vermehrten Risiken, d.h. Störungen in besagter Prozesskette zu rechnen. Da zudem die zugrunde liegende GFK-Schicht selbst farblos und nicht UV-beständig ist, muss ein großer Aufwand betrieben werden, um den Ski oder das Snowboard über die separat aufzuklebende Folie mit Bedruckung mit den entsprechenden Eigenschaften und Design auszustatten.

Darüber hinaus weisen Ski oder Snowboards oftmals auch ein Design an der Unterseite bzw. der Lauffläche auf. Wie ebenfalls in Figur 3 gezeigt, muss eine standardmäßig extrudierte Lauffläche (24) jedoch mittels teurem Siebdruckverfahren (25) hinterdruckt werden, bevor sie auf beispielsweise eine GFK-Schicht (23) aufgebracht werden kann. Dabei erweist sich das Siebdruckverfahren (25) als nachteilig, da hier für jede Farbe ein eigenes Sieb hergestellt werden muss und nur einfache Grafiken mit möglichst wenigen Farben umsetzbar sind. Demgegenüber könnte auch eine gesinterte Lauffläche eingesetzt werden, die wiederum teuer und nicht hochtransparent ist. Diese ist zwar prinzipiell einem Sublimationsdruckverfahren zugänglich, ergibt aber aufgrund ihrer milchigen Erscheinung und damit schlechten Transparenz ein nur ungenügendes Druckbild. Des Weiteren besteht auch die Möglichkeit, die GFK-Schicht selbst mittels Siebdruckverfahren zu gestalten, wobei die vorstehend beschriebenen Nachteile in Kauf genommen werden müssen. Prinzipiell ist dabei allen diesen Bedruckungsverfahren gemein, dass selbst bei Kombination mit anderen Druckverfahren wie beispielsweise dem Sublimationsdruckverfahren zumindest ein "Hintersieben" mit weißem Farbmittel erfolgen müsste, da eine Sublimation weißer Farbe nicht möglich ist.

Wie anhand der Figur 3 ersichtlich ist, besteht ein Bedarf nach einer Möglichkeit, auf die Folie mit Bedruckung (19) als Oberschicht auf der Oberseite, die mit einem Haftmittel (20) auf eine GFK-Schicht (21) laminiert ist, verzichten zu können, und/oder auf eine hinterseitige Bedruckung der Lauffläche (24) mittels Siebdruck verzichten zu können.

Demzufolge liegt der vorliegenden Erfindung die Aufgabe zugrunde, ein faserverstärktes Kunststoff-Flächengebilde bereitzustellen, das selbst, ohne zu hintersieben, bedruckbar ist und nicht vergilbt.

Diese Aufgabe wird durch die in den Ansprüchen gekennzeichneten Gegenstände gelöst.

Insbesondere wird ein bedruckbares faserverstärktes Kunststoff-Flächengebilde bereitgestellt, umfassend ein Matrixharz, Verstärkungsfasern und ein violettes und/oder blaues farbgebendes Additiv in einer Menge von 0,5 bis 15 Teilen, bezogen auf 100 Teile Matrixharz, ein weißes farbgebendes Additiv in einer Menge von 0,5 bis 15 Teilen, bezogen auf 100 Teile Matrixharz, und weiter umfassend eine Gelcoatharzschicht auf einer der Hauptoberflächen, wobei die Gelcoatharzschicht ein Harz und ein violettes und/oder blaues farbgebendes Additiv in einer Menge von 0,1 bis 2 Teilen, bezogen auf 100 Teile Harz, und ein weißes farbgebendes Additiv in einer Menge von 0,1 bis 4 Teilen, bezogen auf 100 Teile Harz, umfasst.

Überraschenderweise wurde festgestellt, dass sich ein faserverstärktes Kunststoff-Flächengebilde, das neben einem Matrixharz und Verstärkungsfasern ein violettes und/oder blaues farbgebendes Additiv in vorstehend beschriebener Menge umfasst, selbst bedrucken lässt, wobei das farbgebende Additiv zur UV-Stabilisierung beiträgt und dadurch einer Vergilbung entgegenwirkt, womit beispielsweise der Einsatz der günstigen extrudierten und hochtransparenten Lauffläche möglich ist, die anschließend auf das bedruckte gebläute faserverstärkte Kunststoff-Flächengebilde als beispielsweise Untergurt aufgebracht werden kann, ohne dass besagte Lauffläche selbst zum Zwecke der Gestaltung modifiziert werden müsste, da der Druck auf dem Flächengebilde als Untergurt direkt durch die Lauffläche hindurch sichtbar ist.

Dabei ist erfindungsgemäß ein Mindestanteil an violettem und/oder blauem farbgebenden Additiv von einem halben Teil zur Bläuung nötig. Diese Bläuung wirkt dem Grund-Gelbstich entgegen und wirkt zudem der weiteren Vergilbung durch die gegebenenfalls hohen Bedruckungstemperaturen vor.

Überraschenderweise wurde zudem festgestellt, dass sich ein faserverstärktes Kunststoff-Flächengebilde, das neben einem Matrixharz, Verstärkungsfasern und dem violetten und/oder blauen farbgebenden Additiv ein weißes farbgebendes Additiv bzw. Farbmittel in einer Menge von 0,5 bis 15 Teilen, bezogen auf 100 Teile Matrixharz, umfasst, ebenfalls selbst bedrucken läßt, womit wiederum beispielsweise der Einsatz der günstigen extrudierten und hochtransparenten Lauffläche möglich ist, die anschließend auf das bedruckte weiße faserverstärkte Kunststoff-Flächengebilde als beispielsweise Untergurt aufgebracht werden kann, ohne dass besagte Lauffläche selbst zum Zwecke der Gestaltung modifiziert werden müßte. Der weiße Hintergrund führt dabei zu brillanten Ergebnissen in Farbintensitäten, -tiefen und -schärfen.

Gemäß der vorliegenden Erfindung umfasst das bedruckbare faserverstärkte Kunststoff-Flächengebilde weiter eine Gelcoatharzschicht auf einer der Hauptoberflächen, wobei die Gelcoatharzschicht ein violettes und/oder blaues farbgebendes Additiv bzw. Farbmittel in einer Menge von 0,1 bis 2 Teilen, bezogen auf 100 Teile Harz, umfasst. Gemäß der vorliegenden Erfindung kann die Gelcoatharzschicht je nach Verwendung des erfindungsgemäßen Flächengebildes auch auf beiden Hauptoberflächen angeordnet sein.

Überraschenderweise wurde festgestellt, dass sich eine derart gestaltete Gelcoatharzschicht selbst bedrucken lässt. Zusätzlich wird durch die Zugabe eines solchen violetten und/oder blauen farbgebenden Additivs die UV-Stabilisierung erhöht und dadurch einer Vergilbung entgegengewirkt. Da die Gelcoatharzschicht chemisch mit dem bedruckbaren faserverstärkten Kunststoff-Flächengebilde verbunden ist, kann hier erfindungsgemäß vorteilhaft die Verfahrenskette in der Herstellung verkürzt und die begleitende Fehleranfälligkeit des Verfahrens reduziert werden, da beispielsweise der Schritt der Verklebung der bedruckbaren Oberschicht mit dem Obergurt entfällt.

Dabei ist erfindungsgemäß ein Mindestanteil an violettem und/oder blauem farbgebenden Additiv von 0,1 Teilen zur Bläuung der Gelcoatharzschicht nötig. Diese Bläuung wirkt dem Grund-Gelbstich entgegen und wirkt zudem der weiteren Vergilbung durch die gegebenenfalls hohen Bedruckungstemperaturen vor.

Die Gelcoatharzschicht umfasst zusätzlich ein weißes farbgebendes Additiv bzw. Farbmittel in einer Menge von 0,1 bis 4 Teilen, bezogen auf 100 Teile Harz.

Überraschenderweise wurde festgestellt, dass sich zum einen die Gelcoatharzschicht selbst bedrucken lässt und zum anderen schwarz bedruckte Bereiche maximale Schwarz-Intensität aufweisen, während hell bedruckte Bereiche sich durch hohe Temperatureinwirkung nicht gelblich verfärben. Dabei spielt die vorstehend beschriebene genaue Abstimmung der Mengen der weißen und violetten und/oder blauen farbgebenden Additive erfindungsgemäß eine wichtige Rolle: Die Gelcoatharzschicht muss zum einen mit möglichst wenig farbgebenden Additiven versehen werden, da diese später diffundierenden farbgebenden Additiven bzw. Farbmitteln einen Widerstand bieten und die diffundierenden farbgebenden Additive überdecken und somit einen weißen Schleier über ein entsprechendes Druckmotiv ziehen würden. Zum anderen hätte ein farbloses Harz einen leichten Gelbstich und würde UV-Strahlung ungehindert in das nicht oder nicht genügend UV-stabilisierte Matrixharz eindringen lassen. Somit ist erfindungsgemäß ein Mindestanteil an weißem farbgebendem Additiv von 0,1 Teilen nötig, welcher zusätzlich von einer leichten Bläuung durch ein violettes und/oder blaues farbgebendes Additiv in einer Menge von mindestens 0,1 Teilen auf jeweils 100 Teile Harz unterstützt wird. Letztere Bläuung wirkt dem Grund-Gelbstich entgegen und beugt zudem der weiteren Vergilbung durch die gegebenenfalls hohen Bedruckungstemperaturen vor.

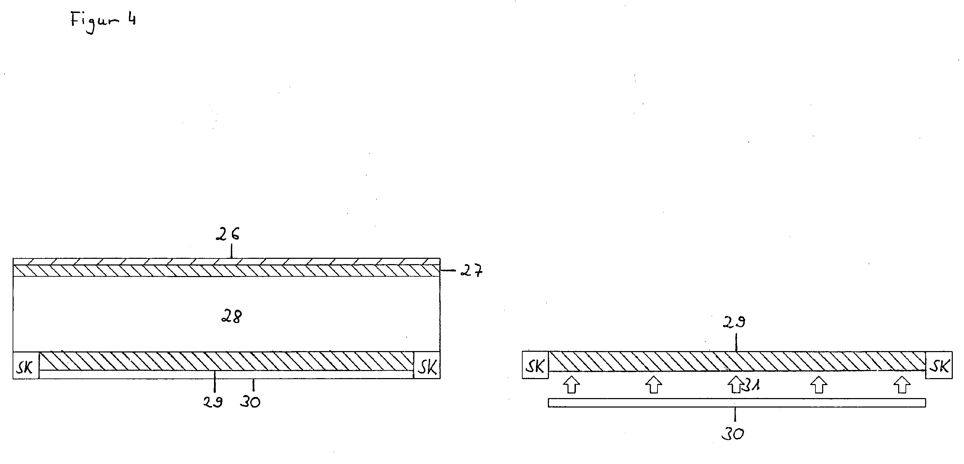

In obigem Zusammenhang zeigt Figur 4 einen vereinfachten Querschnitt durch ein Snowboard gemäß der vorliegenden Erfindung mit sowohl bedrucktem Untergurt (29) als auch bedruckter Gelcoatharzschicht (26) auf dem Obergurt (27), wobei Unter- und Obergurt (29, 27) auf den beiden Hauptoberflächen des Kerns (28) aus Schaum oder Holz angeordnet sind. Erfindungsgemäß kann dabei das bedruckbare faserverstärkte Kunststoff-Flächengebilde als Untergurt (29) direkt mittels Druckverfahren (31) bedruckt werden, und anschließend die kostengünstige und hochtransparente Lauffläche (30) auf den bedruckten Untergurt aufgebracht werden. Bei der erfindungsgemäß bevorzugten Verwendung von Sublimationsdruck ist hierbei die Verwirklichung von Fotodesigns bzw. beliebig vieler Farben möglich. Zudem ist der Einsatz von leuchtfarbenen Laufflächen möglich, ohne die GFK-Schicht vorher weiß hintersieben zu müssen.

Wie in Figur 4 zudem gezeigt, kann erfindungsgemäß vorteilhafterweise die Gelcoatharzschicht (26) direkt bedruckt werden, was zu einem Gewichts-, Materialkosten- und Produktionskostenersparnis gegenüber den bisher zu verwendenden bedruckten Folien, die mittels Haftmittelschicht auf dem Obergurt angebracht wurden, führt. Darüber hinaus sind die Risiken einer fehlerhaften Herstellung durch Verkürzung der Prozesskette reduziert. Schließlich sorgt die Gelcoatharzschicht durch ihre UV-Beständigkeit selbst für einen entsprechenden Schutz des Produkts vor UV-Strahlung, ohne dass weitere Schutzmaßnahmen wie Schutzfolien nötig wären.
Figur 1 zeigt einen Explosionsquerschnitt eines Skis nach dem Stand der Technik.
Figur 2 zeigt einen weiteren Explosionsquerschnitt eines Skis nach dem Stand der Technik.
Figur 3 zeigt einen vereinfachten Querschnitt durch ein Snowboard nach dem Stand der Technik sowie einen Ausschnitt, der die Hinterdruckung der Lauffläche nach dem Stand der Technik darstellt.
Figur 4 zeigt einen vereinfachten Querschnitt durch ein Snowboard gemäß der vorliegenden Erfindung sowie einen Ausschnitt, der die direkte Bedruckung des faserverstärkten Kunststoff-Flächengebildes als Untergurt zeigt.
Figur 5a zeigt die erfindungsgemäße direkte Bedruckung einer Gelcoatharzschicht und Figur 5b zeigt die erfindungsgemäße Bedruckung einer Gelcoatharzschicht durch eine Kunststoff-Folie hindurch.

Der Ausdruck "Flächengebilde" wie hierin verwendet schließt sämtliche Werkstoffformen ein, die flächenförmig ausgestaltet sind, wie beispielsweise Platten oder Bahnen. Gemäß einer bevorzugten Ausführungsform liegt das erfindungsgemäße bedruckbare faserverstärkte Kunststoff-Flächengebilde, umfassend ein Matrixharz, Verstärkungsfasern und die entsprechenden farbgebenden Additive, als Laminat vor.

Der Begriff "Verstärkungsfaser" unterliegt gemäß der vorliegenden Erfindung keiner speziellen Einschränkung und schließt sämtliche Fasern ein, die geeignet sind, in die Kunststoffmatrix eingebettet zu werden und deren mechanische und Struktur-Eigenschaften in gewünschter Weise zu beeinflussen.

Die Verstärkungsfasern können gemäß der vorliegenden Erfindung in der Kunststoffmatrix als Gewebe, Gelege, Geflecht, Vlies, Gitter oder Netz, oder in Häckselform vorliegen.

Gemäß der vorliegenden Erfindung können Basalt-, Bor-, Glas-, Keramik-, Kieselsäure-, Stahl-, Aramid-, Kohlenstoff-, Polyester-, Nylon-, Polyethylen-, Plexiglas-, Holz-, Flachs-, Hanf- und Sisalfasern, einzeln oder in Kombination, zur Verstärkung der Kunststoffmatrix des Flächengebildes eingesetzt werden. Glasfasern und/oder Kohlenstofffasern sind dabei besonders bevorzugt.

Der Ausdruck "Matrixharz" unterliegt gemäß der vorliegenden Ausführung keinerlei besonderer Einschränkung, solange das Matrixharz geeignet ist, Fasern verschiedenster Art und Form einzubetten und durch Aushärten einen formstabilen Werkstoff zu ergeben. Als Kunststoffmatrix kann im Bauteil der vorliegenden Erfindung jeder geeignete Duroplast eingesetzt werden. Faserverstärkte Kunststoffe mit duroplastischer Matrix lassen sich nach dem Aushärten bzw. dem Vernetzen der Matrix nicht mehr umformen. Sie weisen jedoch einen hohen Temperatureinsatzbereich auf. Zudem weisen faserverstärkte Kunststoffe mit duroplastischer Matrix meist die höchsten Festigkeiten auf.

Gemäß der vorliegenden Erfindung kann die vorliegende Kunststoffmatrix Epoxid-, ungesättigtes Polyester-, Vinylester-, Phenol-Formaldehyd-, Diallylphthalat-, Methacrylat-, Polyurethan- und Amino-, insbesondere Melamin-und Harnstoffharz, einzeln und gegebenenfalls in Kombination, umfassen.

Besonders bevorzugt ist dabei gemäß der vorliegenden Erfindung ein Flächengebilde mit einer faserverstärkten Epoxidharzmatrix. Am meisten bevorzugt ist dabei der Einsatz von Glasfasern und/oder Kohlenstofffasern. Dabei beträgt der Faservolumenanteil allgemein erfindungsgemäß 20 bis 65%, bevorzugt 30 bis 60% und am meisten bevorzugt 35 bis 60%.

Die Dicke des Flächengebildes, insbesondere des Laminatbereichs, d.h. der resultierenden (ausgehärteten) Kombination von Matrixharz und Verstärkungsfasern, beträgt gemäß der vorliegenden Erfindung im Allgemeinen 0,2 bis 3 mm, bevorzugt 0,3 bis 1,5 mm und am meisten bevorzugt 0,4 bis 1,2 mm.

Das faserverstärkte Kunststoff-Flächengebilde der vorliegenden Erfindung ist nicht auf das Vorliegen einer einzigen Kunststoffmatrix beschränkt und kann gegebenenfalls mehrere solcher Kunststoffmatrices aufweisen, die beispielsweise schichtweise oder vermischt angeordnet sind. Auf diese Weise können, beispielsweise durch Kombination verschiedener Matrixharze, die Eigenschaften des resultierenden Flächengebildes gezielt beeinflusst werden. Das gleiche gilt für den Einsatz verschiedener vorstehend beschriebener Verstärkungsfasern. Dementsprechend ergibt sich eine Vielzahl von Kombinationen aus verschiedenen Matrixharzen und Verstärkungsfasern bzw. -arten und -richtungen.

Als violette bzw. blaue farbgebende Additive dienen gemäß der vorliegenden Erfindung allgemein beispielsweise Dioxazin-Violett, Cobalt-Violett, Mangan-Violett, Ultramarin-Violett, Berliner Blau, Indanthron, Indigo, Kalkblau, Cobalt-Blau, Cobaltblau-Coelinblau, Phthalocyanin-Blaupigmente, Cyanin-Blau, Reflexblau, Smalte oder Ultramarin-Blau, einzeln oder in beliebiger Kombination.

Der Anteil der violetten und/oder blauen farbgebenden Additive beträgt im erfindungsgemäßen faserverstärkten Kunststoff-Flächengebilde 0,5 bis 15 Teile, bevorzugt 3 bis 13 Teile und am meisten bevorzugt 4 bis 12 Teile, bezogen auf 100 Teile Matrixharz.

Als weiße farbgebende Additive dienen gemäß der vorliegenden Erfindung allgemein beispielsweise Titandioxid, Bariumsulfat oder Zinksulfid, einzeln oder in beliebiger Kombination.

Der Anteil der weißen farbgebenden Additive beträgt im erfindungsgemäßen faserverstärkten Kunststoff-Flächengebilde 0,5 bis 15 Teile, bevorzugt 3 bis 13 Teile und am meisten bevorzugt 4 bis 12 Teile, bezogen auf 100 Teile Matrixharz.

Wenn gemäß der vorliegenden Erfindung sowohl violette und/oder blaue als auch weiße farbgebende Additive in dem Matrixharz des faserverstärkten Kunststoff-Flächengebildes vorliegen, liegen diese bevorzugt in einer Kombination von 0,5 bis 10 Teilen violettes und/oder blaues farbgebendes Additiv zu 0,5 bis 10 Teilen weißes farbgebendes Additiv vor, bevorzugt von jeweils 1,0 bis 9,0 Teilen, mehr bevorzugt von jeweils 1,5 bis 8,0 Teilen. Eine besonders bevorzugte Kombination sind 2 Teile violettes und/oder blaues farbgebendes Additiv und 3 Teile weißes farbgebendes Additiv, jeweils bezogen auf 100 Teile Matrixharz.

Wenn sowohl violettes und/oder blaues farbgebendes Additiv als auch weißes farbgebendes Additiv in dem Matrixharz des bedruckbaren faserverstärkten Kunststoff-Flächengebildes der vorliegenden Erfindung vorliegt, bzw. wenn sowohl violettes und/oder blaues farbgebendes Additiv als auch weißes farbgebendes Additiv in dem Harz der Gelcoatharzschicht vorliegt, wie nachstehend beschrieben, soll der resultierende weiße Farbton des Flächengebildes bzw. der Gelcoatharzschicht gemäß der vorliegenden Erfindung im CIELAB-Farbraumsystem einem Wert bzw. Koordinate L* von 70 bis 100, bevorzugt von 75 bis 95, einem Wert bzw. Koordinate a* von -8 bis 6, bevorzugt von -4 bis 2 und einem Wert bzw. Koordinate b* von -8 bis 8, bevorzugt von -4 bis 4 entsprechen, gemessen mit der Lichtart D65 und einem Beobachtungswinkel von 10°, beispielsweise mit einer Konica Minolta CM 2600 d (D8-Optik) im Farbraum LAB. Gemäß der vorliegenden Erfindung zu erzielende vorrangig weiße Farbtöne können zudem im RAL-System mit beispielsweise RAL 1013, RAL 9001, RAL 9002, RAL 9003, RAL 9006, RAL 9010, RAL 9016, RAL 9018 und RAL9020 angegeben werden.

Wie schon vorstehend erwähnt, umfasst das bedruckbare faserverstärkte Kunststoff-Flächengebilde gemäß der vorliegenden Erfindung weiter eine Gelcoatharzschicht auf einer der Hauptoberflächen, wobei die Gelcoatharzschicht ein Harz, ein violettes und/oder blaues farbgebendes Additiv in einer Menge von 0,1 bis 2 Teilen, bevorzugt von 1 Teil, und ein weißes farbgebendes Additiv in einer Menge von 0,1 bis 4 Teilen, bevorzugt von 2 Teilen, und jeweils bezogen auf 100 Teile Harz, umfasst. Als Harz eignen sich dem Fachmann bekannte UV-stabilisierte, auf Isophthalsäure basierende ungesättigte Polyesterharze.

Wenn gemäß der vorliegenden Erfindung sowohl violette und/oder blaue als auch weiße farbgebende Additive in der Gelcoatharzschicht vorliegen, liegen diese bevorzugt in einer Kombination von 0,1 bis 2,0 Teilen violettes und/oder blaues farbgebendes Additiv zu 0,1 bis 4,0 Teilen weißes farbgebendes Additiv vor, bevorzugt von 0,4 bis 1,5 Teilen violettes und/oder blaues farbgebendes Additiv zu 1,0 bis 3,0 Teilen weißes fargebendes Additiv, mehr bevorzugt von 0,5 bis 1,3 Teilen violettes und/oder blaues farbgebendes Additiv zu 1,5 bis 2,5 Teilen weißes fargebendes Additiv, jeweils bezogen auf 100 Teile Harz.

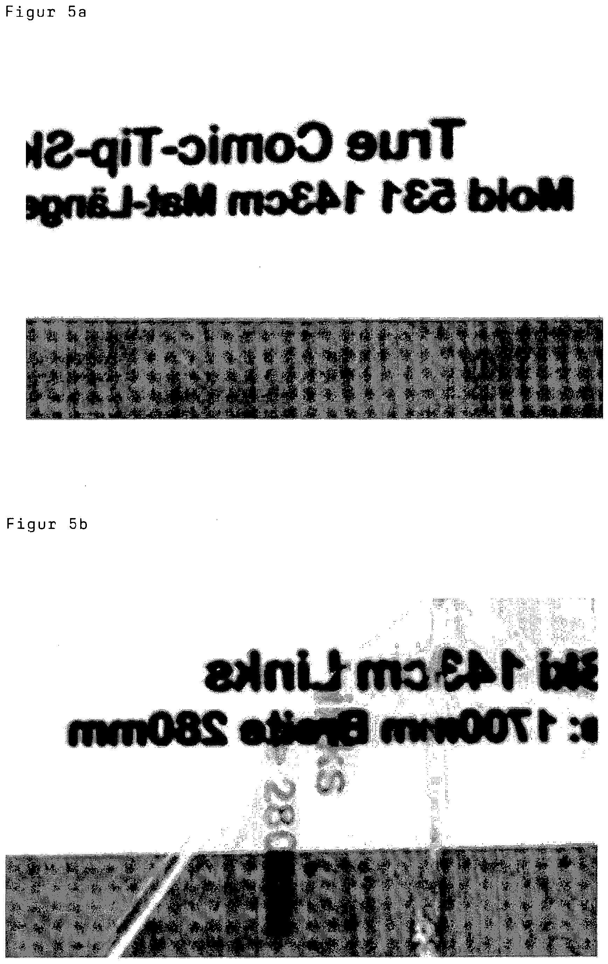

Figur 5a zeigt die erfindungsgemäße direkte Bedruckung einer Gelcoatharzschicht, wie in Beispiel 4 nachstehend näher beschrieben.

Die Dicke der Gelcoatharzschicht beträgt im Allgemeinen 100 bis 500 µm, bevorzugt 150 bis 450 µm und am meisten bevorzugt 150 bis 250 µm. Wie schon vorstehend ausgeführt, ist die Gelcoatharzschicht gemäß der vorliegenden Erfindung bevorzugt UV- und witterungsbeständig.

Gemäß einer weiteren bevorzugten Ausführungsform umfasst das bedruckbare faserverstärkte Kunststoff-Flächengebilde zudem eine auf der Gelcoatharzschicht angeordnete Kunststoff-Folie. Dabei kann es sich um die Trägerfolie handeln, die nachstehend beschrieben zunächst bereitgestellt wird, um das erfindungsgemäße bedruckbare faserverstärkte Kunststoff-Flächengebilde zu erstellen. Als Kunststoffe können hierbei erfindungsgemäß beispielsweise Polyethylenterephthalat (PET), Polyethylen, Polypropylen oder Polytetrafluorethylen (PTFE) eingesetzt werden, wobei eine klebekaschierte Polypropylen-Schutzfolie bevorzugt ist.

Bevorzugt ist im bedruckbaren faserverstärkten Kunststoff-Flächengebilde der vorliegenden Erfindung die Kunststoff-Folie für Sublimationsfarbstoffe durchlässig. Dies hat den Vorteil, dass die Folie vor und nach der Bedruckung auf dem Produkt verbleiben kann und die Oberschicht während der Fertigstellung vor Beschädigungen schützt. Nach der endgültigen Fertigstellung kann die Folie abgezogen werden. Die Folie kann darüber hinaus auch den Zweck haben, das unter Umständen auftretende sogenannte "Schüsseln" der Deckschichten zu minimieren. Das Schüsseln kann durch eine Nachhärtung des Gelcoats bei der mit hoher Temperatur durchgeführten Bedruckung ausgelöst werden, da prinzipiell die Möglichkeit besteht, dass sich hierbei der Gelcoat leicht zusammenzieht.

Figur 5b zeigt die erfindungsgemäße Bedruckung einer Gelcoatharzschicht durch eine Kunststoff-Folie hindurch, wie in Beispiel 5 nachstehend näher beschrieben, wobei die Folie von links nach rechts teilweise abgezogen ist.

Gemäß der vorliegenden Erfindung kann die vorstehend beschriebene Kunststoff-Folie auch direkt auf dem beispielsweise als Laminat vorliegenden bedruckbaren faserverstärkten Kunststoff-Flächengebilde, umfassend ein Matrixharz, Verstärkungsfasern und die entsprechenden Additive, vorliegen, um dieses zu schützen und entsprechend zu bedrucken.

Im Speziellen weist der für die für Sublimationsfarbstoffe durchlässige Kunststoff-Folie verwendete Kunststoff gemäß der vorliegenden Erfindung bevorzugt einen dielektrischen Verlustfaktor tan δ von 0,0 bis 0,02 (bzw. ≤ 0,02), bevorzugt von 0,0 bis 0,01 (bzw. ≤ 0,01) auf. Gemäß "Handbuch Kunststoff-Verbindungstechnik" [Herausgeber: Gottfried Ehrenstein; München: Carl Hanser Verlag, 2004 (Seite 329 f.)] stellt der dielektrische Verlustfaktor tan δ einen Indikator für die Polarität eines Materials dar: je geringer der dielektrische Verlustfaktor tan δ, desto geringer die Polarität. Seine Größe ist vom Dipolmoment µ der Kunststoffmoleküle (Maß für die Symmetrie der Ladungsverteilung im Molekül) und den zwischen den Molekülen wirkenden Nebenvalenzkräften abhängig. Als Kunststoffe können hierbei erfindungsgemäß beispielsweise Polyethylen, Polypropylen oder PTFE eingesetzt werden.

Gemäß der vorliegenden Erfindung beträgt die Dicke der Folie bevorzugt 10 bis 140 µm, mehr bevorzugt 15 bis 100 µm.

Zur Verbesserung der temporären Haftung der Kunststoff-Folie auf der Hauptoberfläche oder der Gelcoatharzschicht kann die Kunststoff-Folie bevorzugt eine Klebekaschierung bzw. Haftmittelbeschichtung auf der Seite, welcher der Gelcoatharzschicht zugewandt ist, aufweisen. Gemäß der vorliegenden Erfindung umfasst eine solche Haftmittelbeschichtung Kautschuk und Harze, um eine entsprechende Grünklebkraft zu gewährleisten. Dabei beträgt das Flächengewicht der Haftmittelbeschichtung 0,5 bis 150 g/m², bevorzugt von 0,8 bis 100 g/m² und am meisten bevorzugt von 1,0 bis 40 g/m².

Gemäß der vorliegenden Erfindung hat sich überraschender- und vorteilhafterweise gezeigt, dass die Verwendung einer durchdruckbaren Folie ein besonders brilliantes Druckergebnis ermöglicht, insbesondere werden Farbungleichheiten verhindert. Im Speziellen wird durch die Anwendung von Druck und Temperatur, wie nachstehend beschrieben, die Folie während des Drucks weich, ohne jedoch zu schmelzen, was eine genaue Anpassung der Folie an die Oberflächenstruktur der zu bedruckenden Fläche bedingt. Somit erreichen die die Folie durchdringenden farbgebenden Additive im Druckvorgang überall gleichmäßig die zu bedruckende Oberfläche, was zu einer hohen Druckhomogenität führt. Dies ermöglicht das Erreichen eines besseren Druckergebnisses im Vergleich zur direkten Bedruckung der gleichen Fläche ohne Folie.

Die vorliegende Erfindung stellt zudem ein Verfahren zur Herstellung des bedruckbaren faserverstärkten Kunststoff-Flächengebildes bereit, umfassend die Schritte:
(i) das Bereitstellen einer Trägerfolie,
(i') das Aufbringen und Aushärten der die farbgebenden Additive umfassenden Gelcoatharzschicht auf der Trägerfolie,
(ii) das Aufbringen des die farbgebenden Additive umfassenden Matrixharzes auf die Gelcoatharzschicht,
(iii) das Einbringen der Verstärkungsfasern in das Matrixharz,
(iv) das Ausquetschen von überschüssigem Harz und Luft und das Auftragen einer Rückseitenfolie,
(v) das Aushärten des Matrixharzes und
(vi) das Abziehen der Rückseitenfolie.

Darüber hinaus kann gemäß der vorliegenden Erfindung nach Schritt (vi) ein Schritt (vii) des Abziehens der Trägerfolie erfolgen. Anschließend kann auf das erfindungsgemäße Flächengebilde, umfassend ein Matrixharz, Verstärkungsfasern und die farbgebenden Additive, als solches oder auf die nachstehend beschriebene Gelcoatharzschicht in einem Schritt (viii) die Kunststoff-(Schutz)Folie gemäß der vorliegenden Erfindung anstelle der Trägerfolie aufgebracht werden.

Das erfindungsgemäße Verfahren unterliegt keiner besonderen Einschränkung und kann beispielsweise ein manuelles oder ein automatisches Verfahren sein. Bevorzugt ist das erfindungsgemäße Verfahren ein automatisches Verfahren, welches beispielsweise mittels eines Produktionsbandes durchgeführt wird.

Die im vorstehenden Verfahren eingesetzte Trägerfolie unterliegt zunächst keiner besonderen Einschränkung und kann beispielsweise jede geeignete Kunststofffolie sein, die den Prozessbedingungen des erfindungsgemäßen Verfahrens standhält. Eine Trägerfolie aus Polyethylenterephthalat (PET) ist hierbei zunächst bevorzugt.

Der Schritt des Härtens des Matrixharzes und/oder der nachstehend beschriebenen Gelcoatzusammensetzung unterliegt keiner besonderen Einschränkung und schließt beispielsweise kalthärtende Systeme und thermisches Härten ein. Typische Temperaturen für thermisches Härten liegen im Bereich von 50 bis 200°C, beispielsweise im Bereich von 60 bis 150°C, von 75 bis 140°C oder von 80 bis 120°C.

Der Schritt des Einbringens der Verstärkungsfasern unterliegt keiner besonderen Einschränkung und kann beispielsweise mittels einer Stahlwalze, welche die entsprechend zugeführten Materiallagen in die Kunststoffmatrix einführt, durchgeführt werden.

Der Schritt des Entfernens von überschüssigem Harz unterliegt ebenfalls keiner besonderen Einschränkung und kann beispielsweise durch eine Kalanderanordnung durchgeführt werden.

Wie schon vorstehend ausgeführt, kann im Verfahren zur Herstellung eines bedruckbaren faserverstärkten Kunststoff-Flächengebildes der vorliegenden Erfindung die Trägerfolie die für Sublimationsfarbstoffe durchlässige Kunststoff-Folie sein (d.h. der für die Trägerfolie verwendete Kunststoff weist einen dieelektrischen Verlustfaktor tan δ von ≤ 0,02 auf), insbesondere wenn eine Gelcoatharzschicht vorliegt, welche durch die Kunststoff-Folie hindurch bedruckt werden soll. Dabei handelt es sich gemäß der vorliegenden Erfindung bevorzugt um eine Polyethylen (PE)-, Polypropylen (PP)- oder PTFE-Folie, besonders bevorzugt um eine Polyethylen (PE)- oder Polypropylen (PP)-Folie. Gemäß einer weiteren Ausführungsform der vorliegenden Erfindung kann, wie schon vorstehend beschrieben, die Trägerfolie jedoch auch abgezogen und durch die Kunststoff-Folie gemäß der vorliegenden Erfindung ersetzt werden, wobei hier eine klebekaschierte Polypropylen-Schutzfolie besonders bevorzugt ist.

Darüber hinaus stellt die vorliegende Erfindung auch ein Verfahren zur Bedruckung des bedruckbaren faserverstärkten Kunststoff-Flächengebildes bereit, umfassend den Schritt:
(α) das Bedrucken des Verstärkungsfasern und die farbgebenden Additive umfassenden Matrixharzes selbst, oder
(β) das Bedrucken des Verstärkungsfasern und die farbgebenden Additive umfassenden Matrixharzes selbst durch die Kunststoff-Folie hindurch, oder
(γ) das Bedrucken der die farbgebenden Additive umfassenden Gelcoatharzschicht, oder
(δ) das Bedrucken der die farbgebenden Additive umfassenden Gelcoatharzschicht durch die Kunststoff-Folie hindurch.

Gemäß einer bevorzugten Ausführungsform der vorliegenden Erfindung stellt sich das Verfahren zur Bedruckung wie folgt dar, wenn das bedruckbare faserverstärkte Kunststoff-Flächengebilde, umfassend ein Matrixharz, Verstärkungsfasern und die entsprechenden Additive, in Form eines Laminats vorliegt: das Verfahren umfasst den Schritt:
(α') das Bedrucken des Laminats selbst, oder
(β') das Bedrucken des Laminats selbst durch die Kunststoff-Folie hindurch, oder
(γ') das Bedrucken der die farbgebenden Additive umfassenden Gelcoatharzschicht, die auf dem Laminat angeordnet ist, oder
(δ') das Bedrucken der die farbgebenden Additive umfassenden Gelcoatharzschicht, die auf dem Laminat angeordnet ist, durch die Kunststoff-Folie hindurch.

Wie schon vorstehend ausgeführt, erfolgt die Bedruckung im erfindungsgemäßen Verfahren zur Bedruckung des bedruckbaren faserverstärkten Kunststoff-Flächengebildes bevorzugt mittels Sublimationsfarbstoffen.

Überraschenderweise wurde festgestellt, dass der Sublimationsdruck, der bisher vor allem in der Textilindustrie zur Bedruckung von Stoffen Anwendung findet, erfolgreich auf blau und/oder violett und zusätzlich weiß eingefärbte faserverstärkte Kunststoff-Flächengebilde bzw. Gelcoatharzschichten als zu bedruckendes Material angewendet werden kann. Erfindungsgemäß erlaubt es die Struktur des faserverstärkten Kunststoff-Flächengebildes bzw. der Gelcoatharzschicht, einen entsprechenden Sublimationsfarbstoff ausreichend tief in das Material diffundieren zu lassen, um so eine dauerhafte Farbhaltbarkeit zu gewährleisten. Dabei ist von besonderer Bedeutung, dass durch die Wahl der farbgebenden Additive und ihrer eingesetzten Mengen gemäß der vorliegenden. Erfindung ein Vergilben verhindert und die Grundlage für ein brilliantes Druckergebnis bereitgestellt werden kann, wie schon vorstehend beschrieben.

Der Sublimationsdruck ist ein relativ neues Druckverfahren, bei dem Tinte bzw. farbgebende Additive in den Trägerstoff eingedampft (sublimiert) werden und somit in den Trägerstoff diffundieren. Da die Tinte beim Sublimationsdruck vollständig in das Material eindampft, erfolgt nach dem Übertrag auf das zu bedruckende Material keine strukturelle Veränderung der Oberfläche. Zuvor wird ein entsprechender Träger mit der Sublimationstinte bedruckt und dann mit einer Transferpresse durch Erwärmen und unter Druck auf das zu bedruckende Material übertragen. Dabei ist je nach zu bedruckendem Material eine entsprechende Wahl und Anpassung der Druck-/Temperaturparameter vorzunehmen, um einen optimalen Druckvorgang sicherzustellen, ohne dass das zu bedruckende Material in Mitleidenschaft gezogen wird. Beispielsweise sollte gemäß der vorliegenden Erfindung sichergestellt werden, dass beim Bedrucken durch die Kunststoff-Folie hindurch ein Schmelzen derselben vermieden wird. Dementsprechend ist der Schmelzpunkt der Kunststoff-Folie bei der Wahl der entsprechenden Verfahrensparameter zu berücksichtigen.

Gemäß einer bevorzugten Ausführungsform des erfindungsgemäßen Flächengebildes ist der mindestens eine Sublimationsfarbstoff von der Unter- bzw. Oberseite her diffundiert. Dabei beträgt die Eindringtiefe bevorzugt 1 bis 200 µm, mehr bevorzugt 10 bis 150 µm.

In der vorliegenden Erfindung ist der Sublimationsfarbstoff bevorzugt aus der Gruppe der Sublimationsfarbstoffe auf Wasser-, Lösungsmittel- und Ölbasis, einzeln oder in Kombination, ausgewählt.

Üblicherweise werden 1 bis 7 Sublimationsfarbstoffe auf einem Transferpapier (beispielsweise der Firma Coldenhove) bereitgestellt. Diese werden zuvor auf das Transferpapier gedruckt. Zur Bedruckung eines entsprechenden Materials wird das so bedruckte Transferpapier mit diesem unter Anwendung von Wärme und gegebenenfalls Druck in Kontakt gebracht. Obgleich im Allgemeinen Papier als Grundlage des Transfermaterials gewählt wird, können erfindungsgemäß auch andere Träger eingesetzt werden, sofern diese zuerst bedruckt oder in anderer Weise mit sublimationsfähigen Farbstoffen oder Pigmenten behandelt werden können.

Die Diffusion des mindestens einen Sublimationsfarbstoffs in die Schicht aus faserverstärktem Kunststoff oder Gelcoatharz des Flächengebildes der vorliegenden Erfindung erfolgt somit unter Anwendung von Wärme, bevorzugt in einem Temperaturbereich von 80 bis 300°C. Ein mehr bevorzugter Temperaturbereich ist hierbei von 100 bis 240°C, am meisten bevorzugt von 150 bis 200°C.

Darüber hinaus ist im Flächengebilde der vorliegenden Erfindung der mindestens eine Sublimationsfarbstoff bevorzugt unter Anwendung von Druck eindiffundiert. Eine entsprechende Sublimation erfolgt im Allgemeinen schon bei relativ geringen Drücken und ist nach oben theoretisch - abgesehen von der jeweiligen Gerätetechnik und den verwendeten Materialien - nicht eingeschränkt. Gemäß der vorliegenden Erfindung kann ein entsprechender bevorzugter Druckbereich von 2 bis 300 bar/m², mehr bevorzugt von 10 bis 200 bar/m² angegeben werden.

Die Übertragung kann erfindungsgemäß an einer automatischen Laminiermaschine erfolgen. Bei diesem kontinuierlichen Verfahren wird beispielsweise ein Papier (Druckträger) zusammen mit dem bedruckbaren faserverstärkten Kunststoff-Flächengebilde eingezogen und an einer beheizten Trommel vorbeigeführt. Hinter der Trommel wird das Papier vom Flächengebilde abgezogen.

Wie schon vorstehend ausgeführt, können im erfindungsgemäßen Verfahren, obgleich im Allgemeinen Papier als Grundlage des Transfermaterials gewählt wird, auch andere Trägerschichten eingesetzt werden, sofern dies zuerst bedruckt oder in anderer Weise mit sublimationsfähigen Farbstoffen oder Pigmenten behandelt werden können.

Alternativ kann erfindungsgemäß auch ein diskontinuierliches, also statisches Verfahren zum Einsatz kommen. Dabei wird entsprechend eine beheizte Presse eingesetzt.

Gemäß der vorliegenden Erfindung beträgt hier die Zeit der Berührung von beispielsweise Übertragungspapier und zu bedruckendem Flächengebilde im Allgemeinen im Bereich von 5 und 300 Sekunden, vorzugsweise im Bereich von 10 bis 200 Sekunden.

Des Weiteren stellt die vorliegende Erfindung die Verwendung des bedruckbaren faserverstärkten Kunststoff-Flächengebildes, umfassend ein Matrixharz, Verstärkungsfasern, ein violettes und/oder blaues farbgebendes Additiv und ein weißes farbgebendes Additiv, das zusätzlich eine Gelcoatharzschicht auf einer der Hauptoberflächen umfasst, als Halbzeug, beispielsweise als Ober- bzw. Untergurt in einem Snowboard, Ski, Kiteboard, Wakeboard, Longboard oder Skateboard, bereit.

Des Weiteren können obige Verwendungen des bedruckbaren faserverstärkten Kunststoff-Flächengebildes auch kombiniert werden, um sowohl Unter- als auch Obergurt in einem Snowboard, Ski, Kiteboard, Wakeboard, Longboard oder Skateboard bereitzustellen.

Schließlich stellt die vorliegende Erfindung auch die Verwendung des vorstehend beschriebenen bedruckbaren faserverstärkten Kunststoff-Flächengebildes als Flächenelement von beispielsweise Caravans, Lastkraftwagen und in der plakativen Darstellung wie beispielsweise Werbebanner bereit.

Gemäß der vorliegenden Erfindung kann das bedruckbare faserverstärkte Kunststoff-Flächengebilde, umfassend ein Matrixharz, Verstärkungsfasern und violette und/oder blaue und weiße farbgebende Additive, überraschender- und vorteilhafterweise direkt als Untergurt in entsprechenden Sportprodukten wie beispielsweise Ski eingesetzt werden, wobei hier direkt die transparente Lauffläche aufgeklebt werden kann. Dies führt zu einer entsprechenden Kostenreduzierung und ermöglicht gleichzeitig eine neue Freiheit in der Gestaltung, ohne die vorstehend beschriebenen Probleme in Kauf nehmen zu müssen. Darüber hinaus kann die vorliegende Erfindung bei zusätzlichem Gelcoat mit violetten und/oder blauen und weißen farbgebenden Additiven auf einer der Hauptoberflächen auch als Obergurt in beispielsweise Ski eingesetzt werden, was wiederum zu einer Gewichts- und Kostenreduzierung bei gleichzeitig freier Gestaltung und Verringerung von Verfahrensschritten führt. Dabei kann vorteilhafterweise beim Einsatz einer direkt durchsublimierbaren Schutzfolie, von der sich das Sublimationspapier nach dem Sublimieren wieder ablösen lässt, und die dabei am Obergurt genügend haften bleibt, während des gesamten Produktionsprozesses die Oberfläche geschützt werden, und erst vor der Verpackung wieder abgenommen werden.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

Die Laminate in den Beispielen 1 bis 3 wurden jeweils auf einer vollautomatischen Anlage bei Temperaturen von 80 bis 120°C ausgehärtet.

### Referenzbeispiel 1

### Farbloses Laminat ohne Gelcoat

Verglichen werden zwei Laminate aus Epoxidharz: ein Laminat ohne farbgebende Additive und ein Laminat mit einem blauen farbgebenden Additiv (Phthalocyanin-Blaupigment) in einer Menge von 8 Teilen bezogen auf 100 Teile Harz. Als Verstärkungsfasern wurden jeweils Glasfasern eingesetzt.

Die Laminate wurden mit Hilfe einer Presse unter gleichen Bedingungen mit einem Druck von 50 bar/m² und einer Temperatur von 175°C bedruckt. Zur Verwendung kam dabei ein Transferpapier der Firma Coldenhove, das 100 Sekunden lang mit den Laminaten verpresst wurde.

Anschließend wurde eine Farbmessung vor einem weißen Hintergrund mit den LAB-Werten 0,4 der a-Koordinate, 1,6 der b-Koordinate und 91,44 der L-Koordinate durchgeführt. Dazu wurde das Spektrophotometer Konica Minolta CM-2600d verwendet, das mit der Lichtart D65 unter einem Beobachtungswinkel von 10° im CIELAB-Farbraumsystem misst.

Die Messergebnisse zeigen, dass bei dem Laminat ohne farbgebende Additive der Wert der a-Koordinate um -0,94 Einheiten und der der b-Koordinate um 3,13 Einheiten von dem des Laminats mit blauem farbgebenden Additiv (Phthalocyanin-Blaupigment) abweicht. Die Vergilbung des ungefärbten Harzes schlägt sich also in den Messwerten nieder.

### Referenzbeispiel 2

### Farbloses Laminat mit Gelcoat

Verglichen werden zwei Laminate, die jeweils einen Gelcoat aus ungesättigtem Polyesterharz tragen. Beide Laminate bestehen aus einer Matrix aus Epoxidharz und Glasverstärkungsfasern. Eines der Laminate wurde ohne farbgebende Additive hergestellt, das zweite enthält im Gelcoat 1 und im Matrixharz 8 Teile blaues farbgebendes Additiv (Phthalocyanin-Blaupigment), jeweils bezogen auf 100 Teile Harz.

Die Laminate wurden mit Hilfe einer Presse unter gleichen Bedingungen mit einem Druck von 50 bar/m² und einer Temperatur von 175°C bedruckt. Zur Verwendung kam dabei ein Transferpapier der Firma Coldenhove, das 100 Sekunden lang mit den Laminaten verpresst wurde.

Anschließend wurde eine Farbmessung vor einem weißen Hintergrund mit den LAB-Werten 0,4 der a-Koordinate, 1,6 der b-Koordinate und 91,44 der L-Koordinate durchgeführt. Dazu wurde das Spektrophotometer Konica Minolta CM-2600d verwendet, das mit der Lichtart D65 unter einem Beobachtungswinkel von 10° im CIELAB-Farbraumsystem misst.

Die Messergebnisse zeigen, dass bei dem Laminat ohne farbgebende Additive der Wert der a-Koordinate um -0,06 Einheiten und der der b-Koordinate um 18,65 Einheiten von dem des Laminats mit blauem farbgebenden Additiv (Phthalocyanin-Blaupigment) abweicht. Die Vergilbung des Laminates aus ungefärbten Harzen schlägt sich hier sehr deutlich in den Messwerten nieder.

### Beispiel 3

### Weißes Laminat mit Gelcoat mit unterschiedlichen Farbanteilen im Gelcoat

Verglichen werden zwei Laminate, die jeweils einen Gelcoat aus ungesättigtem Polyesterharz tragen. Beide Laminate bestehen aus einer Matrix aus Epoxidharz und Glasverstärkungsfasern. Eines der Laminate enthält jeweils bezogen auf 100 Teile Harz im Gelcoat 12 Teile weißes farbgebendes Additiv (Titandioxid) und im Matrixharz 3 Teile weißes farbgebendes Additiv (Titandioxid). Dem zweiten Laminat wurden jeweils bezogen auf 100 Teile Harz im Gelcoat 0,9 Teile blaues farbgebendes Additiv (Phthalocyanin-Blaupigment) und 2 Teile weißes farbgebendes Additiv (Titandioxid) und im Matrixharz 2 Teile blaues farbgebendes Additiv (Phthalocyanin-Blaupigment) und 3 Teile weißes farbgebendes Additiv (Titandioxid) zugegeben.

Die Laminate wurden mit Hilfe einer Presse unter gleichen Bedingungen mit einem Druck von 50 bar/m² und einer Temperatur von 175°C bedruckt. Zur Verwendung kam dabei ein Transferpapier der Firma Coldenhove, das 100 Sekunden lang mit den Laminaten verpresst wurde.

Anschließend wurde eine Farbmessung vor einem weißen Hintergrund mit den LAB-Werten 0,4 der a-Koordinate, 1,6 der b-Koordinate und 91,44 der L-Koordinate durchgeführt. Dazu wurde das Spektrophotometer Konica Minolta CM-2600d verwendet, das mit der Lichtart D65 unter einem Beobachtungswinkel von 10° im CIELAB-Farbraumsystem misst.

Die Messergebnisse zeigen, dass bei dem Laminat mit dem höheren Anteil an farbgebendem Additiv im Gelcoat der Wert der L-Koordinate um 15,35 Einheiten höher liegt als der des Laminats mit geringerem Farbanteil im Gelcoat. Darin zeigt sich, dass die Farben des Drucks mit einem weißen Schleier überzogen sind, die von der zu hohen Sättigung des Harzes mit weißen farbgebenden Additiven herrühren.

### Beispiel 4

Figur 5a zeigt ein Kunststoff-Flächengebilde, umfassend ein Epoxid-Matrixharz und Glas-Verstärkungsfasern. Dem Matrixharz wurden 2 Teile blaues farbgebendes Additiv (Phthalocyanin-Blaupigment) und 3 Teile weißes farbgebendes Additiv (Titandioxid), jeweils bezogen auf 100 Teile Matrixharz, zugegeben.

Das Laminat ist beaufschlagt mit einer Gelcoat-Harzschicht, wobei der Gelcoat von einem UV-stabilisierten, auf Isophthalsäure basierenden ungesättigten Polyesterharz gebildet wird, dem 0,9 Teile blaues farbgebendes Additiv (Phthalocyanin-Blaupigment) und 2,0 Teile weißes farbgebendes Additiv (Titandioxid), jeweils bezogen auf 100 Teile Harz, beigemengt sind.

Das Laminat wurde auf einer vollautomatischen Anlage bei Temperaturen von 80 bis 120°C ausgehärtet und anschließend mit Hilfe einer Presse unter einem Druck von 50 bar/m² und einer Temperatur von 175°C bedruckt. Zur Verwendung kam dabei ein Transferpapier der Firma Coldenhove, das 100 Sekunden lang mit den Laminaten verpresst wurde.

Wie anhand Figur 5a ersichtlich, ermöglicht die vorliegende Erfindung die direkte Bedruckung der Gelcoatharzschicht, ohne dass weitere bedruckbare Schichten verwendet werden müssen.

### Beispiel 5

Figur 5b zeigt ein Kunststoff-Flächengebilde, dessen Aufbau und Herstellung analog zu dem in Beispiel 4 beschriebenen und in Figur 5a dargestellten Kunststoff-Flächengebilde sind.

Zusätzlich wurde dieses Laminat nach Beendigung des Aushärteprozesses mit einer klebekaschierten Polypropylen-Schutzfolie mit einer Dicke von 60 µm versehen.

Die Bedruckung des Laminates erfolgte durch die Schutzfolie hindurch unter den gleichen Parametern wie für das in Beispiel 4 beschriebene und in Figur 5a dargestellte Kunststoff-Flächengebilde.

Wie anhand Figur 5b ersichtlich, ermöglicht die vorliegende Erfindung auch die direkte Bedruckung der Gelcoatharzschicht durch die Kunststoff-(Schutz)Folie hindurch, ohne dass weitere bedruckbare Schichten verwendet werden müssen.

### Bezugszeichenliste

- 1, 13, 22, 28: Schaum- oder Holzkern
- 2, 10: Oberschicht
- 3, 6, 11, 15: Ober- und Unterschicht
- 4: Seitenelement
- 5, 14: Seitenwangen aus Holz und/oder Kunststoff
- 7: Kantenauflage aus Gummi
- 8, 17, 24, 30: Lauffläche
- 9,18, SK: Stahlkante
- 12, 16: Ober- und Untergurtlaminat aus glasfaserverstärktem Kunststoff
- 19: Folie mit Bedruckung
- HM, 20: Haftmittelschicht
- 21, 23: Schicht aus glasfaserverstärktem Kunststoff
- 25: Siebdruckverfahren
- 26: Gelcoatharzschicht
- 27, 29: Ober- und Untergurtlaminat aus faserverstärktem Kunststoff
- 31: Sublimationsdruckverfahren

## Patentansprüche

1. Bedruckbares faserverstärktes Kunststoff-Flächengebilde, umfassend ein Matrixharz, Verstärkungsfasern und ein violettes und/oder blaues farbgebendes Additiv in einer Menge von 0,5 bis 15 Teilen, bezogen auf 100 Teile Matrixharz,
ein weißes farbgebendes Additiv in einer Menge von 0,5 bis 15 Teilen, bezogen auf 100 Teile Matrixharz, und
weiter umfassend eine Gelcoatharzschicht auf einer der Hauptoberflächen, wobei die Gelcoatharzschicht ein Harz und ein violettes und/oder blaues farbgebendes Additiv in einer Menge von 0,1 bis 2 Teilen, bezogen auf 100 Teile Harz, und ein weißes farbgebendes Additiv in einer Menge von 0,1 bis 4 Teilen, bezogen auf 100 Teile Harz, umfasst.

2. Bedruckbares faserverstärktes Kunststoff-Flächengebilde nach Anspruch 1, weiter umfassend eine auf einer der Hauptoberflächen oder auf der Gelcoatharzschicht angeordnete Kunststoff-Folie.

3. Bedruckbares faserverstärktes Kunststoff-Flächengebilde nach Anspruch 2, wobei der für die Kunststoff-Folie verwendete Kunststoff eine geringe Polarität mit einem dielektrischen Verlustfaktor tan δ von ≤ 0,02 aufweist.

4. Verfahren zur Herstellung eines bedruckbaren faserverstärkten Kunststoff-Flächengebildes nach einem der Ansprüche 1 bis 3, umfassend die Schritte:
(i) das Bereitstellen einer Trägerfolie,
(i') das Aufbringen und Aushärten der die farbgebenden Additive umfassenden Gelcoatharzschicht auf der Trägerfolie,
(ii) das Aufbringen des die farbgebenden Additive umfassenden Matrixharzes auf die Gelcoatharzschicht,
(iii) das Einbringen der Verstärkungsfasern in das Matrixharz,
(iv) das Ausquetschen von überschüssigem Harz und Luft und das Auftragen einer Rückseitenfolie,
(v) das Aushärten des Matrixharzes und
(vi) das Abziehen der Rückseitenfolie.

5. Verfahren zur Herstellung eines bedruckbaren faserverstärkten Kunststoff-Flächengebildes nach Anspruch 4, wobei die Trägerfolie die Kunststoff-Folie mit dem verwendeten Kunststoff ist, der eine geringe Polarität mit einem dielektrischen Verlustfaktor tan δ von ≤ 0,02 aufweist.

6. Verfahren zur Herstellung eines bedruckbaren faserverstärkten Kunststoff-Flächengebildes nach Anspruch 4, weiter umfassend nach Schritt (vi)
(vii) das Abziehen der Trägerfolie und
(viii) das Aufbringen der Kunststoff-Folie anstelle der Trägerfolie.

7. Verfahren zur Herstellung eines bedruckbaren faserverstärkten Kunststoff-Flächengebildes nach Anspruch 6, wobei der für die Kunststoff-Folie verwendete Kunststoff eine geringe Polarität mit einem dielektrischen Verlustfaktor tan δ von ≤ 0,02 aufweist.

8. Verfahren zur Bedruckung des bedruckbaren faserverstärkten Kunststoff-Flächengebildes nach einem der Ansprüche 1 bis 3, umfassend den Schritt:
(α) das Bedrucken des Verstärkungsfasern und die farbgebenden Additive umfassenden Matrixharzes selbst, oder
(β) das Bedrucken des Verstärkungsfasern und die farbgebenden Additive umfassenden Matrixharzes selbst durch die Kunststoff-Folie hindurch, oder
(γ) das Bedrucken der die farbgebenden Additive umfassenden Gelcoatharzschicht, oder
(δ) das Bedrucken der die farbgebenden Additive umfassenden Gelcoatharzschicht durch die Kunststoff-Folie hindurch.

9. Verfahren zur Bedruckung des bedruckbaren faserverstärkten Kunststoff-Flächengebildes nach Anspruch 8, wobei die Bedruckung mittels Sublimationsfarbstoffen erfolgt.

10. Verwendung des bedruckbaren faserverstärkten Kunststoff-Flächengebildes nach einem der Ansprüche 1 bis 3 als Halbzeug.

11. Verwendung des bedruckbaren faserverstärkten Kunststoff-Flächengebildes nach Anspruch 10 als Unter- und/oder Obergurt in einem Snowboard, Ski, Kiteboard, Wakeboard, Longboard oder Skateboard.

12. Verwendung des bedruckbaren faserverstärkten Kunststoff-Flächengebildes nach einem der Ansprüche 1 bis 3 als Flächenelement von Caravans, Lastkraftwagen und in der plakativen Darstellung.

## Claims

1. Printable fiber-reinforced plastic planar structure, comprising
a matrix resin, reinforcing fibers and a violet and/or blue coloring additive in an amount of 0.5 to 15 parts relating to 100 parts matrix resin,
a white coloring additive in an amount of 0.5 to 15 parts relating to 100 parts matrix resin, and
further comprising a gel coat resin layer on one of the main surfaces, the gel coat resin layer comprising a resin and a violet and/or blue coloring additive in an amount of 0.1 to 2 parts relating to 100 parts resin, and a white coloring additive in an amount of 0.1 to 4 parts relating to 100 parts resin.

2. Printable fiber-reinforced plastic planar structure according to claim 1, further comprising a plastic film disposed on one of the main surfaces or the gel coat resin layer.

3. Printable fiber-reinforced plastic planar structure according to claim 2, the plastic used for the plastic film having a low polarity with a dielectric loss factor tan δ of ≤ 0.02.

4. Method of producing a printable fiber-reinforced plastic planar structure according to one of the claims 1 to 3, comprising the steps of:
(i) providing a supporting film,
(i') applying and curing of the gel coat resin layer, comprising the coloring additives, on the supporting film,
(ii) applying the matrix resin, comprising the coloring additives, on the gel coat resin layer,
(iii) introducing the reinforcing fibers into the matrix resin,
(iv) squeezing out excess resin and air and applying a rear film,
(v) curing the matrix resin and
(vi) peeling off the rear film.

5. Method of producing a printable fiber-reinforced plastic planar structure according to claim 4, wherein the supporting film is the plastic film with the plastic used which has a low polarity with a dielectric loss factor tan δ of ≤ 0.02.

6. Method of producing a printable fiber-reinforced plastic planar structure according to claim 4, further comprising after step (vi)
(vii) peeling off the supporting film and
(viii) applying the plastic film instead of the supporting film.

7. Method of producing a printable fiber-reinforced plastic planar structure according to claim 6, wherein the plastic used for the plastic film has a low polarity with a dielectric loss factor tan δ of 0.02.

8. Method of printing the printable fiber-reinforced plastic planar structure according to one of the claims 1 to 3, comprising the step:
(α) printing the matrix resin itself, comprising the reinforcing fibers and the coloring additives, or
(β) printing the matrix resin itself, comprising the reinforcing fibers and the coloring additives, through the plastic film, or
(γ) printing the gel coat resin layer, comprising the coloring additives, or
(δ) printing the gel coat resin layer, comprising the coloring additives, through the plastic film.

9. Method of printing the printable fiber-reinforced plastic planar structure according to claim 8, wherein the printing is carried out by means of sublimation dyes.

10. Use of the printable fiber-reinforced plastic planar structure according to one of the claims 1 to 3 as semi-finished product.

11. Use of the printable fiber-reinforced plastic planar structure according to claim 10 as lower and/or upper belt in a snowboard, ski, kiteboard, wakeboard, longboard or skateboard.

12. Use of the printable fiber-reinforced plastic planar structure according to one of the claims 1 to 3 as surface element of caravans, heavy-goods vehicles and in poster illustrations.

## Revendications

1. Structure plane imprimable en matière plastique renforcée par des fibres, comportant une résine de matrice, des fibres de renforcement et un additif chromophore violet et/ou bleu en une quantité allant de 0,5 à 15 parties en poids, par rapport à 100 parties de résine,
un additif chromophore blanc en une quantité allant de 0,5 à 15 parties, par rapport à 100 parties de résine, et
comportant encore une couche de résine de type « gelcoat » sur l'une des surfaces principales, la couche de résine de type « gelcoat » comportant une résine et un additif chromophore violet et/ou bleu en une quantité allant de 0,1 à 2 parties, par rapport à 100 parties de résine, et un additif chromophore blanc en une quantité allant de 0,1 à 4 parties, par rapport à 100 parties de résine.

2. Structure plane imprimable en matière plastique renforcée par des fibres selon la revendication 1, comportant, par ailleurs, une feuille en matière synthétique agencée sur l'une des surfaces principales ou sur la couche de résine de type « gelcoat ».

3. Structure plane imprimable en matière plastique renforcée par des fibres selon la revendication 2 dans laquelle la matière synthétique utilisée pour la feuille en matière synthétique présente une polarité peu élevée et un facteur de perte diélectrique tan δ ≤ 0,02.

4. Procédé pour la fabrication d'une structure plane imprimable en matière plastique renforcée par des fibres selon l'une des revendications 1 à 3, comportant les étapes suivantes :
(i) la mise à disposition d'une feuille de support,
(i') l'application et le durcissement de la couche de résine de type « gelcoat » sur la feuille de support, comportant les additifs chromophores,
(ii) l'application sur la couche de résine de type « gelcoat » de la résine de matrice comportant les additifs chromophores,
(iii) le chargement des fibres de renforcement dans la résine de matrice,
(iv) l'expression d'excès de résine et d'air et l'application d'une feuille au verso,
(v) le durcissement de la résine de matrice et
(vi) le retrait de la feuille au verso.

5. Procédé selon la revendication 4 pour la fabrication d'une structure plane imprimable en matière plastique renforcée par des fibres, dans lequel la feuille de support consiste en la feuille en matière synthétique dont la matière synthétique présente une polarité peu élevée et un facteur de perte diélectrique tan δ ≤ 0,02.

6. Procédé selon la revendication 4 pour la fabrication d'une structure plane imprimable en matière plastique renforcée par des fibres, comportant, après l'étape (vi),
(vii) l'enlèvement de la feuille de support et
(viii) l'application de la feuille en matière synthétique au lieu de la feuille de support.

7. Procédé selon la revendication 6 pour la fabrication d'une structure plane imprimable en matière plastique renforcée par des fibres, dans lequel la matière synthétique utilisée pour la feuille en matière synthétique présente une polarité peu élevée et un facteur de perte diélectrique tan δ ≤ 0,02.

8. Procédé pour l'impression sur la structure plane imprimable en matière plastique renforcée par des fibres selon l'une des revendications 1 à 3, comportant les étapes suivantes :
(α) impression sur la résine de matrice elle-même, comportant les fibres de renforcement et les additifs chromophores, ou
(β) impression sur la résine de matrice elle-même, comportant les fibres de renforcement et les additifs chromophores, au travers de la feuille en matière synthétique, ou
(y) l'impression sur la couche de résine de type « gelcoat » comportant les additifs chromophores, ou
(δ) l'impression sur la couche de résine de type « gelcoat » comportant les additifs chromophores, au travers de la feuille en matière synthétique.

9. Procédé selon la revendication 8 pour l'impression sur la structure plane imprimable en matière plastique renforcée par des fibres, dans lequel l'impression est effectuée à l'aide de colorants de sublimation.

10. Utilisation de la structure plane imprimable en matière plastique renforcée par des fibres selon l'une des revendications 1 à 3, en tant que produit semi-fini.

11. Utilisation selon la revendication 10 de la structure plane imprimable en matière plastique renforcée par des fibres, en tant que couche inférieure et/ou couche supérieure d'une planche de neige (« snowboard »), de ski, de planche aérotractée (« kiteboard »), de planche de sport nautique (« wakeboard ») ou de planche à roulettes (« longboard » et « skateboard »).

12. Utilisation de la structure plane imprimable en matière plastique renforcée par des fibres selon l'une des revendications 1 à 3, en tant qu'élément de surface de caravane, de camion et dans la représentation sur affiches.
